# EUROPEAN PATENT APPLICATION

(11) **EP 2 022 978 A2**
(43) Date of publication of application: **11.02.2009**
(21) Application number: 08013931.4
(22) Date of filing: 04.08.2008
(51) Int. Cl.: F03B 13/00, F03B 17/06

(54) **Electrical power generator connectable to a water network**

(30) Priority: 08.08.2007 IT ud20070142 U
(71) Applicant: Greenpower SRL, 32100 Belluno (IT)
(72) Inventor: Boschetti, Giovanni, 32100 Belluno (IT)
(74) Representative: D'Agostini, Giovanni

(57) **Abstract**

Electrical power generator (1) connectable to a water network preferably for household/local use, characterised in that it consists of a pipe-turbine-generator section (2) in which a rotor group is centrally and axially inserted essentially composed of two parts:
- a first part made of rotor-wheel(s) (35) realizing a turbine (3) in contact with the passing-through water intended to be put in rotation by the advancement of the water in the duct;
- and a second part with hermetically sealed container and plugged to the rotor-wheel (35) of said turbine (3) including an electrical generator (4) with rotor (18) coaxial to said turbine being the stator (17) integrated in the same container and in which the water coming out from said turbine (3) which is upstream of said generator (4) is intended to flow in the annular space between said generator and said pipe-turbine-generator section (2) to gather up again in a full tubular section for the connection to a water network or a waste pipe.

## Description

### Technical field

The present invention relates to an electrical power generator connectable to a water network as defined in the pre-characterizing portion of claim 1.

Installations and/or micro-installations for the production of electrical power utilizing such electrical power generator being themselves part of the present invention.

### Prior art

In the field of the production of electrical power it is well known the recourse to hydraulic turbines converting the hydraulic power of the water falling from a certain height into mechanical power available at the shaft of the turbine itself and on its part converted into electrical power by means of an electrical generator.

### Technical problems of the prior art

The major disadvantages of the above said solutions are:
- the need of a specific study of the components on the basis of the plant design characteristics as capacity and waterfall;
- size;
- cost that could jeopardize the economic convenience in the case of the application in micro electrical stations.

### Aim of the invention

The present invention provides the realization of a new standardized, modular, compact turbine-generator group specially conceived to produce electrical power from an aqueduct water flow.

### Concept of the invention

The aim is achieved with the characteristics of the main claim.

The dependent claims represent advantageous solutions.

### Advantageous effects of the invention

The turbine-generator group consists therefore of a turbine-generator-pipe and it is particularly efficient and it does not require the realization of custom components solving the problem of the need to study specific components on the basis of the plant design characteristics as capacity and waterfall.

The turbine-generator group is compact and can be considered similar to an aqueduct pipe section.

In this way the group can be conveniently installed as a substitute for a part of an aqueduct piping allowing the contemporary and undisturbed operation of the aqueduct.

The recourse to standardized components yields the realization economically advantageous also in the case of the realization of micro-stations.

Said electro-hydraulic group can conveniently be used to generate electrical power in places far from the national distribution networks where either an aqueduct duct/tube or a channelling of a watercourse is available.

Moreover the application of such an electro-hydraulic group can advantageously be used also for the generation of electrical power in case of an emergency.

The group acts also as pressure reducer.

### Description of the drawings

An embodiment is described in the following with reference to the enclosed drawings to be considered as a non-limitative example of this invention in which:

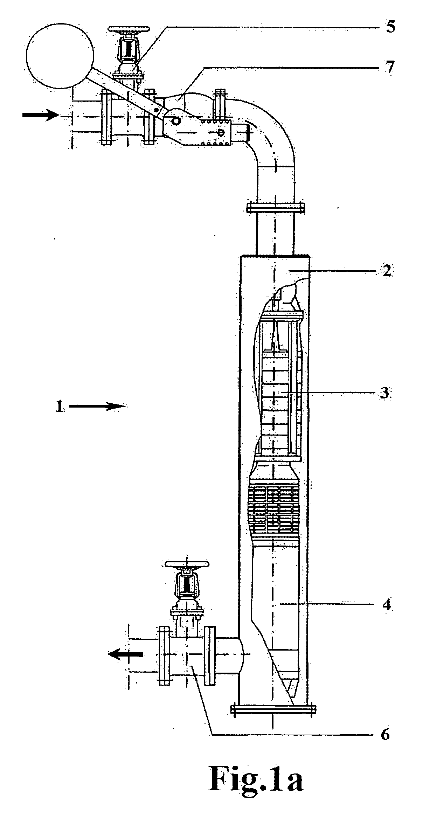

- Fig. 1a is a side-view of the electro-hydraulic group in the embodiment with vertical axis;
- Fig. 1 b is a plan view of the electro-hydraulic group in the embodiment with horizontal axis;
- Fig. 2 is a view of the electrical generator;
- Fig. 3 is a view of the hydraulic machine (turbine);
- Fig. 4 is a view of the assembled electrical generator and hydraulic machine (turbine);
- Fig. 5 is a realization scheme of the installation.

### Detailed description of the drawings

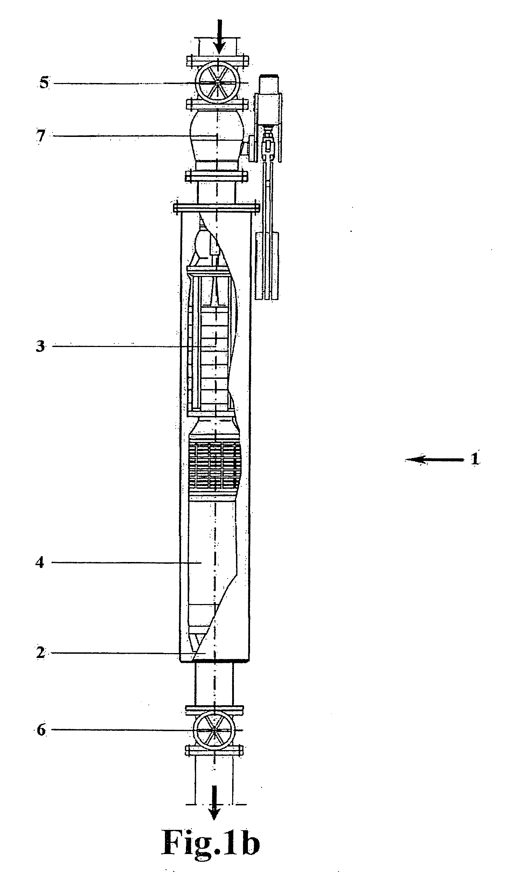

Fig. 1a and Fig. 1b are views of the electro-hydraulic group in the embodiment respectively with vertical axis (side view) and with horizontal axis (plan view) wherein the following elements are shown:
   - the electro-hydraulic group (1) consisting of the booster (2) containing the turbine (3) and the electrical generator (4);
   - the upstream intercepting floodgate (5) of said hydraulic group (1);
   - the modulating valve (7);
   - the downstream intercepting floodgate (6) of said hydraulic group (1).

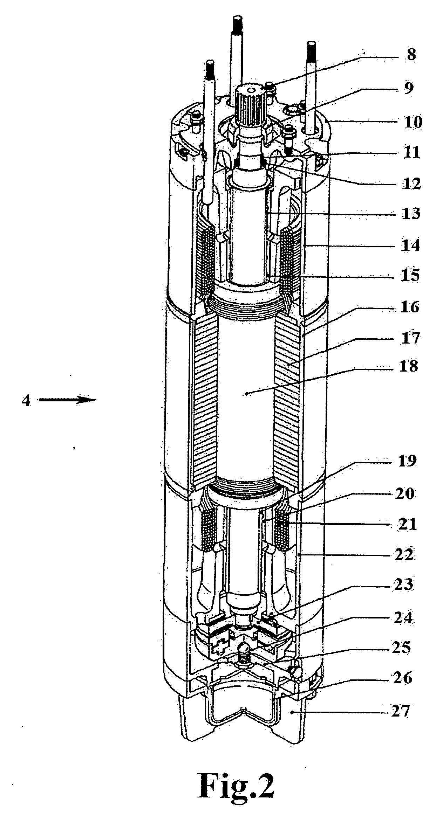

Fig. 2 is a view of the electrical generator (4) wherein the following elements are shown:
   - the shaft of the electrical generator (8);
   - the sand-shield (9);
   - the fitting element (10);
   - the sealing sleeve (11) of said electrical generator (4);
   - the sealing ring (12);
   - the upper sleeve (13) of said electrical generator (4);
   - the upper support (14);
   - the upper bushing (15) of said electrical generator (4);
   - the jacket of the stator (16);
   - the stator (17);
   - the rotor (18);
   - the lower sleeve (19) of said electrical generator (4);
   - the lower bushing (20) of said electrical generator (4);
   - the winding (21);
   - the lower support (22);
   - the thrustbearing (23);
   - the support of the thrustbearing (24);
   - the bottom of the generator (25);
   - the membrane (26);
   - the cover of the membrane (27).

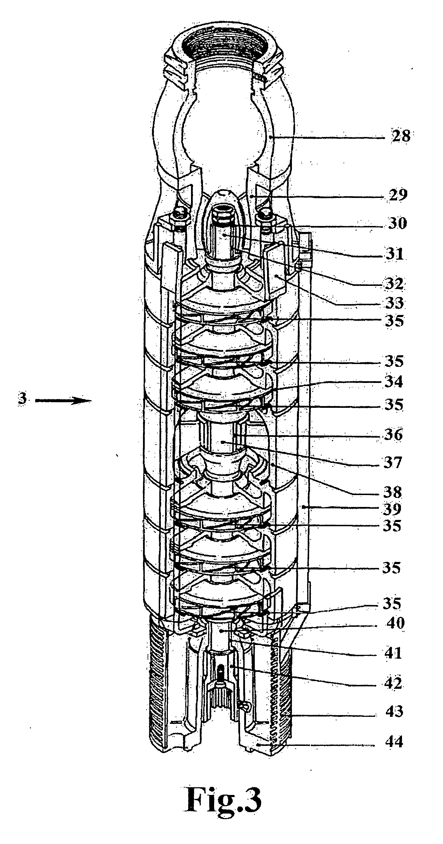

Fig. 3 is a view of the turbine (3) wherein the following elements are shown:
- the inlet body (28);
- the feeding body (29);
- the shaft (30) of said turbine (3);
- the upper sleeve (31) of said turbine (3);
- the upper bushing (32) of said turbine (3);
- the tie-rod (33);
- the intermediate body (34);
- the rotor-wheel (35);
- the intermediate bushing (36) of said turbine (3);
- the intermediate sleeve (37) of said turbine (3);
- the intermediate support (38);
- the cables protection panel (39);
- the lower sleeve (40) of said turbine (3);
- the lower bushing (41) of said turbine (3);
- the joint (42);
- the outlet (43);
- the outlet body (44).

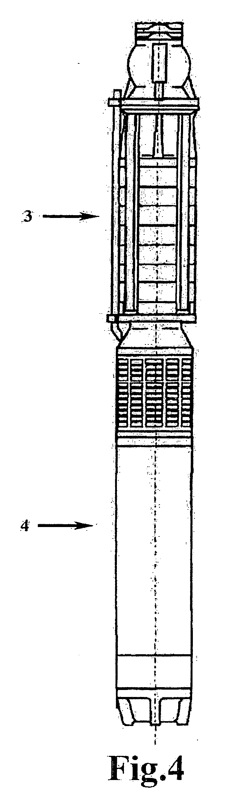

Fig. 4 is a view of the electrical generator (4) axially plugged to the turbine (3).

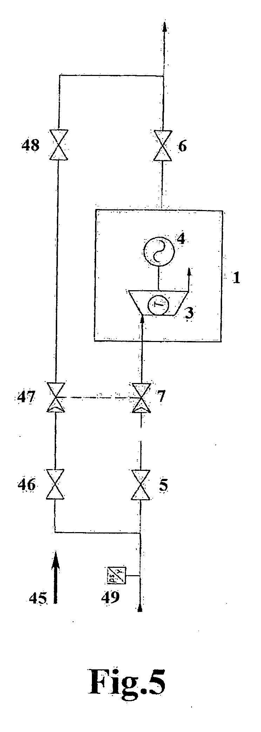

Fig. 5 is a possible realization scheme of the installation wherein the following elements are shown:
- electro-hydraulic group (1) consisting of the turbine (3) and the electrical generator (4);
- the upstream intercepting floodgate (5) of said hydraulic group (1);
- the modulating valve (7);
- the downstream intercepting floodgate (6) of said hydraulic group (1);
- the bypass circuit (45);
- the upstream intercepting floodgate (46) of said bypass circuit (45);
- the pressure reducing valve (47);
- the downstream intercepting floodgate (48) of said bypass circuit (45);
- the pressure gauge (49).

### Description of the invention

Referring to Fig. 1 a and Fig. 1 b which are views of the electro-hydraulic group (1) in the embodiment respectively with vertical axis and with horizontal axis, said group is composed by:
- turbine (3) for the conversion of the hydraulic power of the water passing through a duct in pressure into mechanical power available at the shaft of said turbine;
- electrical generator (4) axially and centrally plugged to said turbine (3) for converting the rotational mechanical power into electrical power;
- metallic case booster (2) holding said electrical generator (4) and said turbine (3) and realizing in its complex a compact assembly that can be considered similar to an aqueduct pipe section.

Said electro-hydraulic group (1) is conveniently associated with:
- upstream intercepting floodgate (5) and downstream intercepting floodgate (6) which allow the closing of the water flow through said electro-hydraulic group (1) with the purpose of maintenance and/or replacement of parts, for instance avoiding the complete emptying of the installation;
- the modulating valve (7) with the function of adjusting the capacity of the water sent to said electro-hydraulic group (1) and of automatic intervention in the case of failure of said group to ensure the continuity of the distribution service of the water so that this goes on undisturbed in a bypass circuit (45) schematically represented in Fig. 5.

In the embodiment with vertical axis represented in Fig. 1a by means of a side view, the flow of the water occurs vertically from the above towards the bottom.

In the embodiment with horizontal axis represented in Fig. 1 b by means of a plan view, the flow of the water occurs horizontally (corresponding in figure to the flow indicated from the above towards the bottom).

The generation of the electrical energy occurs by means of the conversion from the hydraulic power of water that:
- enters the electro-hydraulic group (1) across the booster (2);
- passes internally through the turbine (3);
- forcedly advancing in said turbine (3) operates the rotor-wheels, indicated with (35) in Fig. 3, generating mechanical power available at the shaft of said turbine;
- exits from said turbine (3) through the outlet;
- slides in the annular space between said generator (4) and said pipe section booster (2) to gather up again in a full tubular section at the exit of said booster (2);
- exits from the booster (2) group to connect to the water net or with a waste pipe.

In Fig. 2 the electrical generator (4) is represented, which is contained inside:
- fitting element (10) able to allow the assembly of said electrical generator (4) axially to the turbine (3);
- upper support (14) able to the fixing of the upper bushing (15) wherein the upper sleeve (13) of said generator rotates;
- jacket of the stator (16) able to contain the stator (17) of said generator;
- lower support (22) able to the fixing of the lower bushing (20) wherein the lower compass (19) of said generator rotates;
- bottom (25) of the generator;
- cover of the membrane (27).

The assembly of said components constitutes a hermetic case whose tightness is guaranteed by:
- sand-shield (9);
- sealing ring (12);
- membrane (26).

The new hermetic construction of said generator allows its installation inside the booster (2) and allows said generator to operate completely immersed in the water flow coming out from the turbine with the following advantages:
- the water sideway slides in the annular section between said generator (4) and said booster (2) allowing the obtainment of a particularly compact assembly;
- the water performs the cooling function of said generator (4);
- the lubricated elements of said generator (4) do not enter in contact with the water, ensuring the absolute absence of possible pollution.

The transmission of the mechanical power coming from the turbine occurs through the shaft (8) supported by upper sleeve (13) and lower sleeve (19) that slide on the respective upper bushing (15) and lower bushing (20) and by the thrustbearing (23).

Said shaft (8) includes in its central portion the rotor (18) which is put in rotation inside of the stator (17) accommodated inside the jacket (16) for the conversion of the mechanical power into electrical power.

In Fig. 3 the turbine (3) is shown, which is of the "Francis-multistage" type and which is composed by:
- the inlet body (28) arranged for the fixing on the booster (2);
- the feeding body (29) able to convey the water towards the following portions of said turbine and able to the fixing of the upper bushing (32) wherein the upper sleeve (31) rotates;
- one or more rotor-wheels (35) conveniently alternated with the intermediate body (34) able to the fixing of the intermediate bushing (36) wherein the intermediate sleeve (37) rotates;
- outlet body (44) whereon the outlet (43) is mounted for the water outflow from the inside of said turbine outwards and able to the fixing of the lower bushing (41) wherein the lower sleeve (40) rotates.

The shaft (30) of said turbine (3) is supported by means of said upper bushing (32), intermediate bushing (36), lower bushing (41).

Said shaft is put in rotation by means of the rotor-wheels (35) which convert into mechanical power the hydraulic power the of the water that flows inside the turbine.

Said shaft presents in its lower portion a joint (42) arranged for the connection with the shaft (8) of the electrical generator (4) for the transmission of the mechanical power from said turbine to said generator.

The construction of said turbine is such as to ensure the absolute absence of the possibility of pollution because the lubricated elements do not enter in contact with the water.

Fig. 4 is a view of the electrical generator (4) axially plugged on the turbine (3) prior to the assembly inside the booster (2).

Fig. 5 is a possible scheme of the embodiment of the installation.

The electro-hydraulic group (1) consisting of the turbine (3) and of the electrical generator (4) is conveniently installed parallelly to a bypass circuit (45) with the double function of:
- allowing the maintenance and/or replacement of parts avoiding the complete emptying of the installation and ensuring the continuity of the distribution service of the water. For this purpose both the bypass circuit
- (45) and the circuit of the electro-hydraulic group include upstream and downstream convenient intercepting floodgates (5, 46, 6, 48);
- allowing the automatic intervention of the pressure reducing valve (47) in the case of failure of said electro-hydraulic group (1) in order to ensure the continuity of the distribution service of the water letting it flow undisturbed also in emergency condition. During the operation of the electro-hydraulic group(s) (1), the reducer valve (47) will remain completely closed. The valve is kept closed by the action of a hydraulic cylinder in pressure. In the case of failure of the electrical system the control of the cylinder is missing and said cylinder is put in discharge. Under the action of the counterweight the valve is brought in opening position with a controllable speed (depending on the settings) and limiting the over-speed of said electro-hydraulic group (1).

The electro-hydraulic group (1) is conveniently preceded by the modulating valve (7) that adjusts the capacity of the water towards said group.

Upstream of said bypass circuit (45) and circuit of the electro-hydraulic group a pressure gauge is installed to control the pressure at the entry according to a set-point value set depending on the needs of the aqueduct.

### Industrial application

The installation can be advantageously inserted in a pipe for the water supplying and, thanks to the guarantee of absolute absence of the possibility of pollution, also in an urban distribution water pipe recovering part of the power that otherwise would be dissipated.

Moreover, it is interesting, as a possibility of application for said electro-hydraulic group, the realization of micro hydro-electrical stations which are economically advantageous thanks to the standardization of the used components that cut down the costs eliminating the need for the design of dedicated components conceived on the basis of the plant design characteristics as capacity and waterfall.

## Claims

1. Electrical power generator (1) connectable to a water network or duct, **characterised in that** it consists of a pipe-turbine-generator section (2) in which a rotor group is centrally and axially inserted essentially composed of two parts:
- a first part made of rotor-wheel(s) (35) realizing a turbine (3) in contact with the passing-through water intended to be put in rotation by the advancement of the water in the duct, and;
- a second part with hermetically sealed container and plugged to the rotor-wheel (35) of said turbine (3) including an electrical generator (4) with rotor (18) coaxial to said turbine being the stator (17) integrated in the same container and in which the water coming out from said turbine (3) which is upstream of said generator (4) is intended to flow in the annular space between said generator and said pipe-turbine-generator section (2) to gather up again in a full tubular section for the connection to a water network or a waste pipe.

2. Electrical power generator (1) according to claim 1 further **characterised in that** it comprises conduction, protection and guiding means in order for the lubricated elements to be insulated by sealing preventing the contact with the surrounding water.

3. Electrical power generator (1) according to the previous claims further **characterised in that** it integrates upstream a modulating valve for the adjustment of the capacity.

4. Electrical power generator (1) according to the previous claims further **characterised in that** it integrates upstream and downstream a slicing and/or closing valve, a bypass circuit being provided too.

5. Electrical power generator (1) according to the previous claims further **characterised in that** it includes upstream and downstream respective slicing and/or closing valves, associated to a bypass circuit.

6. Waterworks in which an electrical power generator according to at least one of previous claims is installed.
